# EUROPEAN PATENT APPLICATION

(11) **EP 0 596 171 A1**
(43) Date of publication of application: **11.05.1994**
(21) Application number: 92311233.8
(22) Date of filing: 09.12.1992
(51) Int. Cl.: H04M 1/65

(54) **Integrated circuit voice recorder with endless loop**

(30) Priority: 05.11.1992 US 972117
(71) Applicant: Wong, Tai-Chiu, Tai Po, NT (HK)
(72) Inventor: Gu, Jing-Lu, Milpitas, CA 95035 (US)
(74) Representative: Paget, Hugh Charles Edward

(57) **Abstract**

An integrated circuit voice recorder (100) in accordance with the present invention uses a nonvolatile direct analog storage device (110) to record voice message. The nonvolatile direct analog storage device (110) is controlled by a loop trigger (114). When overflow, the direct analog storage device (110) generates an end of message (EOM) level. The loop trigger (114) then resets the direct analog storage device (110) to its begining address in response to the EOM level. A switch assembly (S_{T1},Sₜₗ) is provided to change the operation mode of the integrated circuit voice recorder (100) so that the integrated circuit voice recorder (100) can record and reproduce voice message. A stop mode is also provided for disabling the direct analog storage device (110). As the control of the loop trigger (114), the integrated circuit voice recorder (100) can looply record message and reproduce recorded message.

## Description

The present invention relates to electronic circuits and, more particularly, to an integrated circuit voice recorder. A major objective of the present invention is to provide an integrated circuit voice recorder that has loop recording/playback function.

The ability to record voice signal has been a requirement in both commercial and industrial applications. In particular, telecord in the commercial field has been driven by the requirements of telecord designers for flexible and reliable control, along with the public demand for sophisticated special effects; for example, the message recorded in a telecord often becomes the most useful evidence to crack criminal cases. Additionally, some important message needs playback a few times to be ensured and comprehended. These forces have motivated the development of modern telecord solutions for the voice signal.

Answer machine is a typical telecord that employs magnetic tape to record the voice signal over telephone. When an answer machine works, voice signal is converted into a variable magnetic field; the variable magnetic field further is recorded on a magnetic tape in the form of magnetic remanence. However, conventional answer machine can not interminably record message due to its tape length. Furthermore, because the magnetic tape is the recording medium, both volume and cost of the answer machine become concerned.

There is also an answer machine capable of interminably record voice signal in which two magnetic tapes are loaded for loop recording. However, this answer machine can not record the message when a conversation is conducting over a telephone. Moreover, with two magnetic tapes loaded, the volume of the answer machine is augmented and its cost becomes less affordable.

In order to record message over the phone, a proposal is to attach a pick-up on the telephone by which the voice signal is forwarded to an external recorder to conduct the recording of conversation over the telephone. However, the external recorder and the attached pick-up can be very inconvenient for the movement of the telephone. In addition, this proposal has the same problems as those of conventional answer machine using magnetic tapes as the recording medium, for example, this recording system neither records nor reproduces message without interval.

As a substitute solution, an electrically-erasable memory may be applied to record voice signal. However, to record voice signal in the electrically-erasable memory requires to convert voice signal into digital data first by an analog to digital (A/D) converter, so the digital data may be electrically written into the memory. Furthermore, a digital to analog (D/A) converter is needed if voice signal has to be reproduced. The obvious tradeoff is that the use of the A/D converter and D/A converter in appliance, such as telecord, may raise the cost significantly. Besides the cost, prior art electrically-erasable memory does not disclose anything about loop recording/playback. Moreover, nonvolatile storage is not available in prior art electrically-erasable memory.

Most recently, Information Storage Devices (ISD), Inc., a company having a business address at 2841 Junction Avenue, Suite 204, San Jose, California 95134, United States, announced a single-chip voice record/playback device. This device performs preamplification, filtering, automatic gain control (AGC), power amplification, control logic, and the analog storage. Analog signal is passed from the filter to the analog transceivers to write into the analog storage array, which can be view as sample-and-hold amplifiers. With the use of the device, information in analog form is stored directly into and read directly from standard EEPROM cells. This device realizes nonvolatile storage of voice signal. However, like other prior art, the single-chip voice record/playback device does not contribute to loop recording/playback.

Thus, the prior art provides a variety of schemes for voice signal storage. However, these schemes generally involve undesirable tradeoffs. What is needed is an integrated circuit voice recorder that provides electrically loop recording/playback of voice signal with nonvolatile storage, so that information can be easily monitored, recorded, and reproduced without interval.

In accordance with the present invention, an integrated circuit voice recorder comprises a mode switching assembly, a storage device, and a loop trigger. The mode switching assembly may provide at least a record mode at which the storage device is enabled to electrically record the voice signal. The storage device produces a level signal when it is overflow. The loop trigger generates a loop trigger signal in response to the level signal. The loop trigger signal is applied to the storage device to reset it into its beginning address so as to loop its operation without interval. Preferably, the storage device is a direct analog storage device which can record the voice signals over a telephone in response to its off-hook state.

The mode switching assembly may also provide a playback mode and a stop mode. When the mode switching assembly is at a playback mode, the storage device is enabled to reproduce the recorded voice signal and generates a level signal when the reproduction of the recorded voice signal is finished.

Preferably, when the mode switch assembly is switched to a stop mode, voltage source for supplying power with the storage device is turned off so that the storage device is disabled from operation. The stop mode is designed to minimize power consumption, which ensures a direct current source can be used for a longer time. The other application of the stop mode is for interruption. The integrated circuit voice recorder can be positioned at the stop mode at anytime to stop recording or playback operation.

Additionally, a line active detector can be included to detect the off-hook state of the telephone. The telephone line active detector is coupled to the mode switching assembly. When the mode switching assembly is at record mode and the telephone is at off-hook state, the line active detector is activated to enable said storage device to record voice signal.

Furthermore, a display device can be provided for indicating the operating modes of the integrated circuit voice recorder. The display device is coupled to the mode switching assembly, to display the operating modes of the voice signal recorder in response to the operation modes of the integrated circuit voice recorder.

In particular, a storage device, such as the single-chip voice record/playback device manufactured by ISD Inc., can be employed in the present invention. An invertor can be used as the loop trigger, which converts the end of message levels from the direct analog storage device into high levels to reset the direct analog storage device to its begining address, thereby performing the loop operation of record/playabck. A speaker is provided at the output of the direct analog storage device for playback of the recorded voice signal.

Advantageously, the present invention may provide for interminable loop recording/playback of voice signal. Since the use of the direct analog storage device, the present invention provides for the combination of its simplification, portable size, nonvolatile storage of voice signal, and low cost in a single integrated circuit voice recorder. These and other features and advantages of the present invention are apparent from the description below with reference to the following drawings.

FIGURE 1 is a functional block diagram of an integrated circuit voice recorder in accordance with the present invention.
FIGURE 2 is a circuit diagram of the integrated circuit voice recorder of FIG. 1.
FIGURE 3 is an illustration showing the loop recording/playback pattern of the integrated circuit voice recorder of FIG. 1.

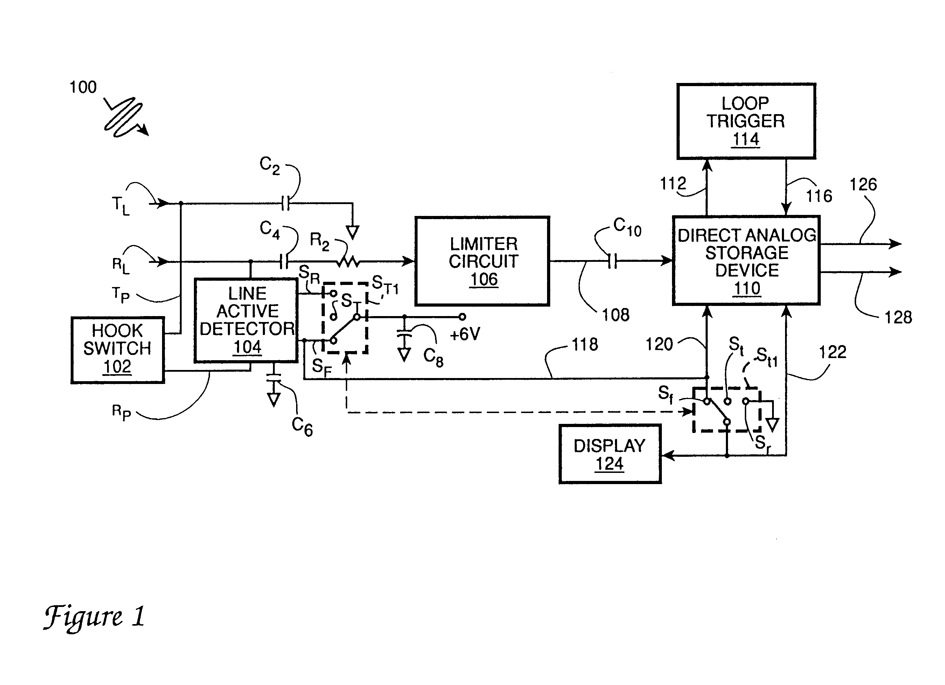

In accordance with the present invention, an integrated circuit voice (ICV) recorder 100 functionally comprises a hook switch 102, a line active detector 104, a limiter circuit 106, a direct analog storage device 110, a loop trigger 114, a display 124, and a switch assembly including tri-step switches S_{T1} and Sₜ₁, as shown in Fig. 1.

The function of hook switch 102 is to alternatively couple and decouple conventional telephone lines T_{L} and R_{L}. Capacitors C₂ and C₄ of telephone lines T and R_{L} are 0.1µ/600V, which are designed to isolate direct current. The resistor R₂ -(50-150kQ) of telephone lines R_{L} functions as voltage-limiting. When hook switch 102 is on, line active detector 104 generates a current signal which is electrically connected S_{R} and S_{F} ends of switch S_{T1} of the switch assembly.

As indicated, switch S_{T1} is a tri-step switch. The tri-step switch S_{T1} sets the record mode at S_{R}, playback mode at S_{F}, and stop mode at S_{T}, respectively. Correspondingly, the tri-step switch Sₜ₁ has also record mode at Sᵣ, playback mode at S_{f}, and stop mode at Sₜ. The mode change of the switch assembly is synchronized so that, for example, when switch S_{T1} is positioned at record mode S_{R}, switch Sₜ₁ is also positioned at its record mode Sᵣ.

When the switch assembly is at record mode Sᵣ, the +6V voltage is applied to direct analog storage device via line active detector 104, lines 118 and line 120. At the same time, since Sᵣ of switch Sₜ₁ is grounded, a low level is delivered to direct analog storage device 110 via line 122. Both high level and low level from switch assembly assure direct analog storage device 110 to record the voice signal that is forward via limiter circuit 106, isolating capacitor C₁₀ (0.1µ) and line 108.

Direct analog storage device 110 continuously records voice signal until it is overflow. At this moment, direct analog storage device 110 sends an end of message (EOM) level to loop trigger 114 via line 112. Loop trigger 114 processes the EOM level and renders a loop trigger signal to direct analog storage device 110 via line 116. The loop trigger signal resets direct analog storage device 110 to its beginning address to continue its recording of the current voice message. Thus, the direct analog storage device 110 can looply record the voice signal without interval.

When the switch assembly is positioned at playback mode, if hook switch 102 is on, which is equivalent to the off-hook state of the telephone, line active detector 104 couples the high level of +6V that is parallel with filter capacitor C₈ (100ti) to direct analog storage device 110 via lines 118 and 120. On the other hand, the high level of +6V is also applied to another input of direct analog storage device 110 via line 122. Both input high levels of direct analog storage device 110 set direct analog storage device 110 to operate at playback mode.

When direct analog storage device 110 finishes its playback of stored voice message, the EOM level to loop trigger 114 is sent to the loop trigger 114 via line 112. Loop trigger 114 processes the EOM level and renders the loop trigger signal to direct analog storage device 110 via line 116. The loop trigger signal resets direct analog storage device 110 to its beginning address for next loop playback operation of the recorded voice message. Thus, the direct analog storage device 110 can repeatedly reproduce the voice signal without interval.

With the stop mode, as indicated, the output of +6V source is suspended so that no voltage is applied to the inputs of direct analog storage device 110. Thus, direct analog storage device 110 is disabled from write or read operation.

Display 124 services as indicating the operation mode of the voice signal recorder 100. Under the record mode, the low level is applied to display 124 so that an indicator is activated to show the record mode. On the other hand, the playback mode provides a +6V high level to display 124, which drives display 124 to indicate the playback mode of the voice signal recorder 100. At the stop mode, no signal goes to display 124 so that no display is presented.

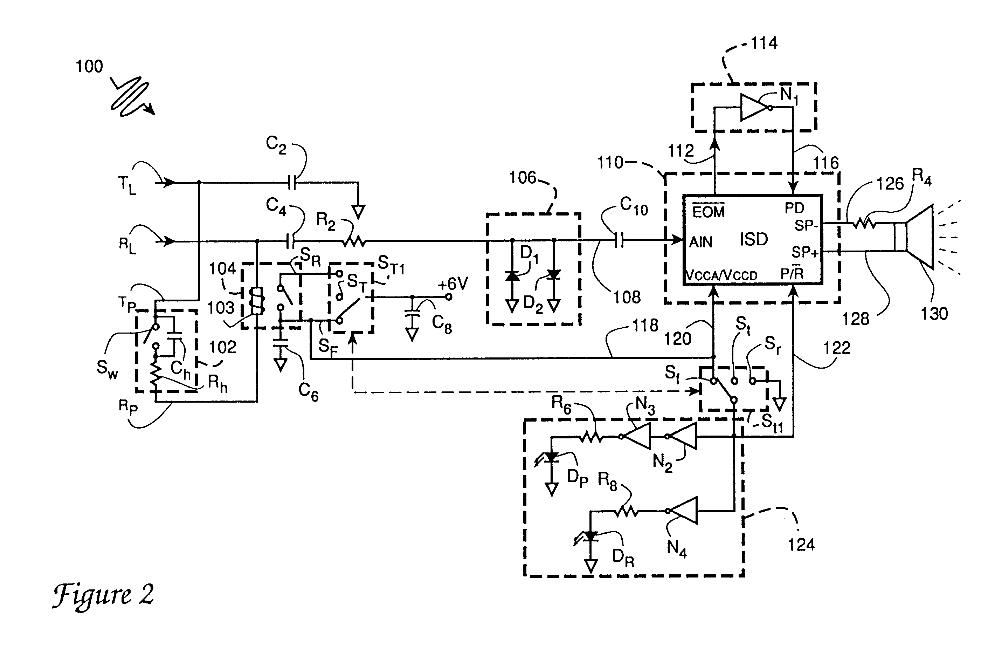

As shown in FIG. 2, the hook switch 102 may be a telephone which is equivalent to a switch S_{w}, a capacitor Cₕ and a resistor Rₕ.Capacitors Cₕ is used to isolate direct current so that only a ring signal can be coupled to the hook switch 102. Line active detector 104 may be embodied by a relay 103 having a switch. Limiter circuit 106 is constituted by reverse-parallel NPN type diodes D₁ and D₂ with 0.7V positive conductive potential. Direct analog storage device 110 is selected from ISD memory chips which is the product of ISD 1000 series family made by ISD, Inc. A speaker is coupled to the analog outputs of the ISD memory to reproduce the recorded voice signal.

The on-hook state of the telephone is equivalent to switch S_{w} off. Thus, no current loop is provided in telephone lines T_{L} and R_{L} under the on-hook state. Only when the telephone is at off-hook state, the switch S_{w} is on so that lines R_{L}, Rp, Tp, and T_{L} can provide a current loop. Accordingly, relay 103 is activated by a current over the current loop to draw its switch on. On the other hand, the voice signal over R_{L} is also applied to the AIN input of the ISD memory by limiter circuit 106.

The states of the hook switch S_{w} control the states of relay switch. On the other hand, the positions of switches S_{T1} and Sₜ₁ then decide the operation mode of the ICV recorder of the present invention. For example, when switches S_{T1} and Sₜ₁ are respectively closed at positions S_{R} and Sᵣ, the +6V voltage is applied to the V_{CCA}/V_{CCD} input of ISD memory via relay switch while P/R input of ISD memory is then grounded by Sᵣ.

According to the specification of the ISD memory, P/R input has to be at low level for its recording operation, and P/R input has to be set at high level for its playback mode. Other pins 1 to 10, 12, 13, 23, and 26 (not shown) of ISD memory are grounded. In addition, pins 17 to 19, 21 and 22 are suspended. The high level applied to VccANcCD and grounded P/R input enable the ISD memory to record the voice signal applied to the AIN input of the ISD memory via line 108. During the ISD memory works at the record mode, the EOM output stays at high level and the PD (Power Down) input is at low level.

When the storage of the ISD memory is overflow, the high level output at the EOM end drops to low level. The low level output from the EOM pin goes to loop trigger 104 that is constituted by an invertor N₁. The low level EOM output is converted by N₁ into a high level and is forwarded to the PD input to reset the ISD memory to its beginning address. Once the PD input is at high level, the output of the EOM end resumes high level. The high level output at the EOM end is converted to low level by invertor N₁. Thus, the PD end is at the low level to wait next loop trigger signal. Meanwhile, the ISD memory begins its loop recording of the voice signal without interval. The loop recording is conducted as the fashion of that the first recorded voice signal in the last loop is first replaced by the voice signal in the current loop. Therefore, the beginning of the current recording loop always follows the end of the last recording loop so that the continuous loop recording is performed.

The outputs at SP- and SP + pins of the ISD memory are coupled to a speaker 130, via lines 126 and 128, and a current-limiting resistor R₄ (1-100Q), for playback of recorded voice message. If an interruption is required, the switches S_{T1} and Sₜ₁ may be respectively closed at S_{T} and Sₜ or S_{F} and S_{f}. In addition, the on-hook state of the telephone can also interrupt the recording operation.

Unlike the record mode, the states of the hook switch 102 does not control the playback mode. Under the playback mode, switches S_{T1} and Sₜ₁ are respectively closed at positions Sp and Sp. Therefore, the +6V voltage is applied to the VccANcCD and sets P/R pin at high level via lines 118, 120 and 122, and switch Sₜᵢ, in spite of the states of the hook switch 102. Accordingly, if required, the ICV recorder of the present invention can reproduce the recorded voice message to the listener over the remote telephone.

Since the V_{CCA}/V_{CCD} and P/R̅ pins are at high level under the playback mode, the ISD memory is enabled to reproduce the recorded voice message. Similarly, with the finish of playback, the ISD memory also sends out the low level at its EOM end; the low level at the EOM end is converted at invertor N₁ to high level and fed to the PD pin. The high level at PD pin initiates the ISD memory to looply repeat the operation of its reproduction without interval by the way of the record mode.

Furthermore, when the ICV recorder 100 is under stop mode, switches S_{T1} and Sₜ₁ are closed at positions S_{T} and Sₜ. Accordingly, no voltage is applied to the V_{CCA}/V_{CCD} and P/R̅ pins of the ISD memory, which disables the ISD memory from operation. The stop mode can be used to interrupt the recording operation of the ICV recorder of the present invention.

The display 124 includes invertors N₂, N₃ and N₄, current-limiting resistors R₆ (200Q) and Rg - (200Q), and light-emitting diodes (LEDs) Dp and D_{R}. Under the record mode, the inputs of invertor N₂ and N₄ are grounded. Thus, a high level drives LED D_{R} to work, and LED Dp is then disabled due to the low level at its positive input.

Otherwise, under the playback mode, since relay switch is on and switches S_{T1} and Sₜ₁ are closed at positions Sp and Sp, the + 6V voltage is applied to the inputs of invertor N₂ and N₄ via relay switch, line 118, switch Sₜ₁. The +6V voltage is converted at invertors N₂ and N₃, and then is applied to LED Dp to drive it work, indicating the playback mode. However, LED D_{R} is disabled due to the low level applied to its positive input.

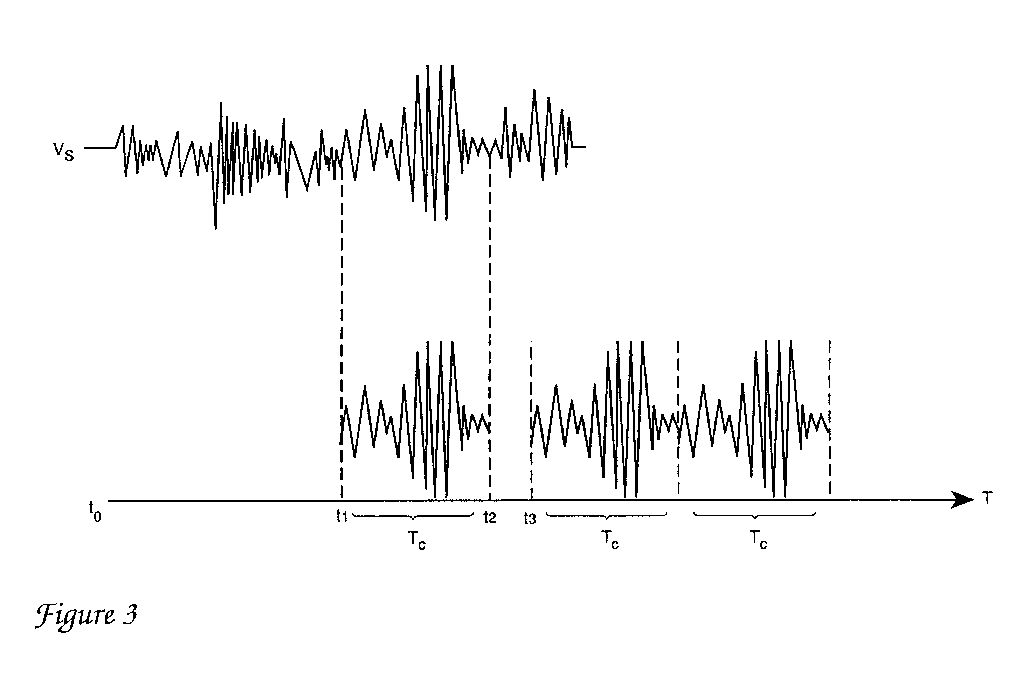

A sample voice signal Vₛ from telephone line T_{L} or telephone handset is shown in FIG. 3. As switches S_{T1} and Sₜ₁ are closed at positions S_{R} and Sᵣ at time to, the ICV recorder operates under record mode so that the voice signal Vₛ is successively stored in the direct analog storage device 110. When direct analog storage device 110 is overflow, loop trigger 114 resets it in response to the output at EOM end, successively storing the voice signal Vₛ. Since the loop recording function described above, the direct analog storage device 110 functions as an interminable recording device.

At time t₂, switches S_{T1} and Sₜ₁ are closed at positions S_{T} and Sₜ so that the ICV recorder operates under the stop mode. Additionally, other interruptions, for example on-hook, can be used to stop the record mode. The period T_{c} defined by time t₁ and t₂ represents the storage capacity of the direct analog storage device 110. The storage capacity may be changed by selecting the storage device of bigger capacity or setting the operation period of the storage device. For example, the preferred embodiment of the present invention sets twenty seconds for the recording of message. As required, however, the recording of message may also be designed as long as ninety seconds. As experiment, the memory capacity of twenty seconds is enough to record important and emergency message.

The recorded voice message may be reproduced under playback mode with switches S_{T1} and Sₜ₁ at positions Sp and Sp. At time t₃, the ICV recorder is switched to the playback mode. Therefore, the recorded voice message during T_{c} is looply playback by direct analog storage device 110 because of the activation of loop trigger 114.

The present invention provides for a convenient voice recorder. The primary operating mode can be record, playback and stop modes. With allowed storage period, one can record the voice message at any time when a conversation is conducting over the phone. Moreover, the direct analog storage device of recorded important message can be permanently kept like a floppy disc. These and other modifications to and variations upon the preferred embodiment are provided for by the present invention.

## Claims

1. An integrated circuit voice recorder (100) for telephone, said integrated circuit voice recorder (100) comprising:
mode switching means (S_{T1}, Sₜi) for setting the operation mode of said integrated circuit voice recorder (100), said mode switching means (S_{T1}, Sₜi) providing at least a record mode;
direct analog storage means (110) for storing voice signal, said direct analog storage means (110) being coupled to said mode switching means (S_{T1}, Sₜᵢ) so that when said mode switching means (S_{T1}, Sₜᵢ) is set at said record mode, said direct analog storage means (110) is enabled to electrically record said voice signal said storage means (110) generating a level signal when said storage means (110) is overflow; and
a loop trigger (114) being coupled to said storage means (110) for responding to said level signal to provide a loop trigger signal that resets said direct analog storage means (110) to its beginning address for looping its operation without interval.

2. An integrated circuit voice recorder (100) as recited in Claim 1 wherein said mode switching means (S_{T1}, Sₜᵢ) provides a playback mode to enable said direct analog storage means (110) so as to reproduce the voice signal recorded in said record mode, said direct analog storage means (110) generating said level signal when the reproduction of the recorded voice signal is finished.

3. An integrated circuit voice recorder (100) of Claim 1 or Claim 2 wherein said mode switching means (S_{T1}, Sₜᵢ) provides a stop mode to disable said direct analog storage means (110) from operation.

4. An integrated circuit voice recorder (100) of any of preceding claims further comprising display means (124) for indicating the operating modes of said integrated circuit voice recorder (100), said display means (124) being coupled to said mode switching means (S_{T1}, Sₜ₁) so as to display the operating modes of said integrated circuit voice recorder (100) in response to said record and playback modes.

5. An integrated circuit voice recorder (100) of any of preceding claims further comprising a speaker (130) for playback of the recorded voice signal, said speaker (130) being coupled to the analog output of said direct analog storage means (110).

6. An integrated circuit voice recorder (100) of any pre-claims wherein said loop trigger (114) is an inverter.

7. An integrated circuit voice recorder (100) of any of preceding claims further comprising a line active detector (104) for detecting said off-hook state of said telephone, said line active detector (104) being coupled to said mode switching means (S_{T1}, Sₜᵢ) so that when said telephone is at said off-hook state and said mode switching means (S_{T1}, Sₜᵢ) is set at said record mode, said line active (104) detector enables said direct analog storage means (110) to record voice signal.

8. A method for recording voice signals of a telephone, comprising steps of:
(a) setting mode switching means (S_{T1},Sₜₗ) to a record mode;
(b) enabling storage means (110) to record said voice signals in response to the record mode of said mode switching means;
(c) generating a level signal when said storage means is overflow; and
(d) resetting said storage means to a beginning address by a loop trigger signal provided by a loop trigger (114) in response to said level signal, so as to continue the recording operation of said storage means (110) without interruption.
